# EUROPEAN PATENT APPLICATION

(11) **EP 3 118 556 A1**
(43) Date of publication of application: **18.01.2017**
(21) Application number: 15761834.9
(22) Date of filing: 20.02.2015
(51) Int. Cl.: F28D 20/00, F28F 19/06

(54) **CHEMICAL HEAT STORAGE DEVICE**

(30) Priority: 10.03.2014 JP 2014046337
(71) Applicant: Kabushiki Kaisha Toyota Jidoshokki, Kariya-shi, Aichi 448-8671 (JP)
(72) Inventor: NOGUCHI Yukihiro, Kariya-shi Aichi 448-8671 (JP); KAWAUCHI Hiroyasu, Kariya-shi Aichi 448-8671 (JP); MORI Kenji, Kariya-shi Aichi 448-8671 (JP); HARIU Satoshi, Kariya-shi Aichi 448-8671 (JP); MURASAKI Takanori, Kariya-shi Aichi 448-8671 (JP)
(74) Representative: TBK
(86) International application number: PCT/JP2015/054852
(87) International publication number: WO 2015/137096

(57) **Abstract**

A chemical thermal storage device 10 includes a reactor 11 and an adsorber 13 connected to the reactor 11 via a pipe 12. The reactor 11 has a stack structure body 18 having a plurality of plate-shaped heat generation parts 16 and a plurality of heat exchange parts 17 alternately stacked. The heat generation part 16 has a thermal storage material 19 that generates heat upon chemical reaction with NH₃ and desorbs NH₃ upon reception of waste heat, and a metal casing that contains the thermal storage material 19. The heat exchange part 17 is a passage of exhaust gas and is constituted of a metal fin. The metal casings of the heat generation parts 16 and the heat exchange parts 17 are joined to each other by brazing, welding or the like. The adsorber 13 contains an adsorption material 23 that is capable of retention and desorption of NH₃ through physical adsorption.

## Description

### Technical Field

The present invention relates to a chemical thermal storage device used, for example, for heating exhaust gas or the like discharged from an engine.

### Background Art

As a conventional chemical thermal storage device, there is known one disclosed, for example, in Patent Literature 1. A chemical thermal storage device disclosed in Patent Literature 1 includes a reactor that is disposed around a catalyst ceramic part purifying exhaust gas discharged from an engine and contains a thermal storage substance (thermal storage material) included in a housing part, and a water introduction tube part that supplies water as a reaction medium for causing the thermal storage substance to generate heat. Upon exothermic reaction between the water and the thermal storage substance, heat is generated from the reactor and the catalyst ceramic part is heated through heat conduction.

### Citation List

### Patent Literature

Patent Literature 1: Japanese Unexamined Patent Publication Application No. S59-208118

### Summary of Invention

### Technical Problem

However, there exist the following problems in the aforementioned conventional art. Namely, when the housing part of the reactor is formed of a metal material similarly to the exhaust pipe, the housing part and the catalyst ceramic part which are different materials cannot be welded or brazed to each other. Hence, the housing part and the catalyst ceramic part are only brought into physical contact with each other. In this case, since heat resistance at the interface between the housing part and the catalyst ceramic part is large, the heat generated in the thermal storage material is hardly transferred to the catalyst ceramic part. Moreover, in order to secure purification performance of the catalyst ceramic part, dimensions thereof equal to or exceeding predetermined ones for the catalyst ceramic part are needed. In this case, since a distance from the thermal storage material to the center part of the catalyst ceramic part must be long, heat resistance between the thermal storage material and the center part of the catalyst ceramic part is large, which causes the heat generated in the thermal storage material not to be sufficiently transferred to the center part of the catalyst ceramic part. Namely, with the conventional configuration, the heat generated in the thermal storage material has not been able to be sufficiently transferred to the catalyst ceramic part which is a heating object.

Moreover, also when heating the exhaust gas flowing in the exhaust pipe, by disposing, in the exhaust pipe, a ceramics-made heat exchanger through which the exhaust gas can flow, and disposing, around the heat exchanger, the reactor containing the thermal storage material, similarly to the above, the distance from the thermal storage material to the center part of the heat exchanger is long, and the heat resistance between the thermal storage material and the center part of the heat exchanger is large. Hence, it has been difficult to sufficiently raise the temperature of the exhaust gas.

An object of the present invention is to provide a chemical thermal storage device capable of efficiently transferring heat generated in a thermal storage material to a fluid.

### Solution to Problem

There is provided a chemical thermal storage device of the present invention, comprising: a reservoir that stores a reaction medium; and a reactor that is connected to the reservoir and heats a fluid, wherein the reactor includes a heat generation part that generates heat, and a heat exchange part made of a metal that forms a flow channel through which the fluid can flow and that exchanges the heat generated in the heat generation part to the fluid, the reactor having a stack structure body having the heat generation part and the heat exchange part alternately stacked, the heat generation part has a thermal storage material that generates the heat upon chemical reaction with the reaction medium and desorbs the reaction medium upon reception of the heat from the fluid, and a metal casing that contains the thermal storage material, and the metal casing and the heat exchange part are joined to each other.

In such a chemical thermal storage device of the present invention, when the reaction medium is supplied from the storage to the reactor, the thermal storage material of the heat generation part and the reaction medium undergo chemical reaction to generate heat from the thermal storage material, the heat is transferred to the heat exchange part to result in heat exchange with the fluid, and thereby, the fluid is heated. In this stage, since the heat generation part and the heat exchange part are alternately stacked and the metal casing of the heat generation part and the metal-made heat exchange part are joined to each other, and thereby, heat resistance at the interfaces between the heat generation part and the heat exchange part is small, the heat generated in the thermal storage material is easily transferred to the heat exchange part. Moreover, the heat generation part and the heat exchange part are stacked, and thereby, the heat exchange part can be formed into multiple stages while being thin. In this case, since a distance from the thermal storage material to the center part of the heat exchange part in the stacking direction is short, heat resistance between the thermal storage material and the center part of the heat exchange part in the stacking direction is small. Due to this, the heat generated in the thermal storage material is sufficiently transferred to the center part of the heat exchange part in the stacking direction. According to the above, the heat generated in the thermal storage materials can be efficiently transferred to the fluid.

The heat exchange part may be disposed on the outermost side of the stack structure body in the stacking direction. When the heat generation part is disposed on the outermost side of the stack structure body in the stacking direction, a part of the heat generated from the heat generation part is sometimes released to the outside of the reactor as waste heat. Therefore, the heat exchange part is disposed on the outermost side of the stack structure body in the stacking direction, and thereby, the heat generated from the heat generation part can be suppressed from being released to the outside of the reactor, and the heat generated in the heat generation part can be exchanged and effectively used between these and the fluid. Moreover, since the heat exchange part is disposed on the outermost side of the stack structure body in the stacking direction, and thereby, the heat exchange part protects the heat generation part from an impact object, damage or the like of the heat generation part can be prevented.

Moreover, the heat exchange part may have the first metal layer, and the second metal layers provided in such a way as to sandwich the first metal layer and having corrosion resistance to the fluid, and the heat conductivity of the first metal layer may be higher than the heat conductivity of the second metal layer. In this way, the first metal layer higher in heat conductivity than the second metal layer is used, and thereby, the heat generated in the thermal storage materials can be further efficiently transferred to the entirety of the heat exchange part. Moreover, the second metal layers having corrosion resistance to the fluid sandwich the first metal layer, and thereby, corrosion of the first metal layer due to the fluid can be prevented.

### Advantageous Effects of Invention

According to the present invention, heat generated in a thermal storage material can be efficiently transferred to a fluid. In this way, the temperature of the fluid can be sufficiently and smoothly raised.

### Brief Description of Drawings

[Figure 1] Figure 1 is a schematic configuration diagram illustrating an exhaust purification system including an embodiment of a chemical thermal storage device according to the present invention.
[Figure 2] Figure 2 is a perspective view of a reactor illustrated in Figure 1.
[Figure 3] Figure 3 is a perspective view (partially including a cross-sectional view) illustrating a modification of a metal fin constituting a heat exchange part illustrated in Figure 2.

### Description of Embodiments

Hereafter, preferred embodiments of a chemical thermal storage device according to the present invention are described in detail with reference to the drawings.

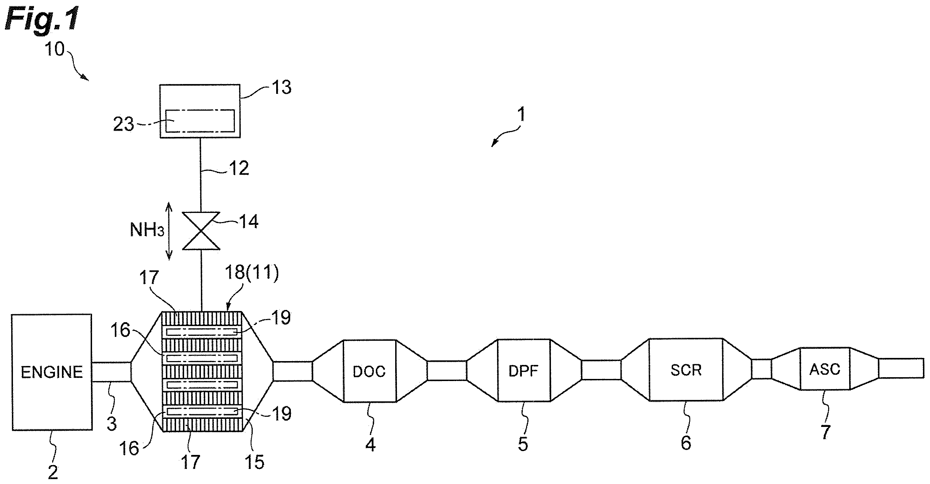

Figure 1 is a schematic configuration diagram illustrating an exhaust purification system including an embodiment of the chemical thermal storage device according to the present invention. In the figure, an exhaust purification system 1 is provided in an exhaust system of a diesel engine 2 of a vehicle (hereinafter referred to simply as engine 2), and is a system that purifies harmful substances (environmental pollutants) contained in exhaust gas discharged from the engine 2.

The exhaust purification system 1 includes an oxidation catalyst (DOC: Diesel Oxidation Catalyst) 4, a diesel exhaust particulate removal filter (DPF: Diesel Particulate Filter) 5, a selective reduction catalyst (SCR: Selective Catalytic Reduction) 6 and an oxidation catalyst (ASC: Ammonia Slip Catalyst) 7, which are arranged in the middle of an exhaust passage 3 connected to the engine 2 sequentially from the upstream side toward the downstream side.

The oxidation catalyst 4 is a catalyst that oxidizes HC (hydrocarbon), CO and the like contained in the exhaust gas and purifies the exhaust gas. The DPF 5 is a filter that collects and removes particulate matter (PM: Particulate Matter) contained in the exhaust gas. The SCR 6 is a catalyst that reduces NOₓ contained in the exhaust gas with urea or ammonia (NH₃), and purifies the exhaust gas. The oxidation catalyst 7 is a catalyst that oxidizes NH₃ that has passed through the SCR 6 and flowed to the downstream side of the SCR 6.

Now, in the oxidation catalyst 4, there exists a temperature region (active temperature) in which it exhibits performance of cleaning up the environmental pollutants. Accordingly, when the temperature of the exhaust gas is low as immediate after the start of the engine 2, in order to make the temperature of the oxidation catalyst 4 the active temperature, it is needed to heat the oxidation catalyst 4. Notably, the active temperature of the oxidation catalyst 4 is, for example, approximately 170 °C to 270 °C. In order to heat the oxidation catalyst 4, it is effective to heat the exhaust gas supplied to the oxidation catalyst 4.

Therefore, the exhaust purification system 1 includes a chemical thermal storage device 10 of the present embodiment. The chemical thermal storage device 10 is a device that heats the exhaust gas without energy by normally storing heat of the exhaust gas (waste heat) and using the waste heat when needed.

The chemical thermal storage device 10 includes a reactor 11 disposed between the engine 2 and the oxidation catalyst 4 on the exhaust passage 3, an adsorber 13 connected to the reactor 11 via a pipe 12, and a solenoid valve 14 provided on the pipe 12. The reactor 11 is contained in an exhaust pipe 15 forming a part of the exhaust passage 3. The exhaust pipe 15 is formed, for example, of stainless steel (SUS).

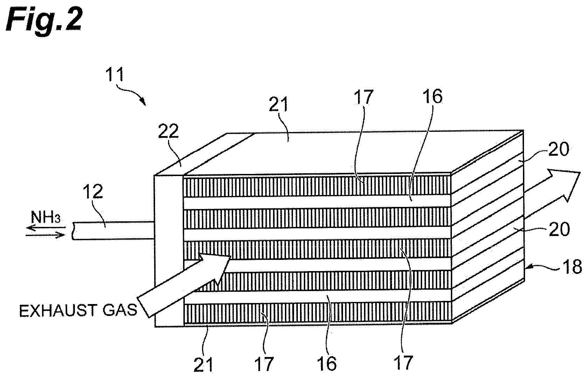

As illustrated also in Figure 2, the reactor 11 has a stack structure body 18 having a plurality of plate-shaped heat generation parts 16 and a plurality of fin-shaped heat exchange parts 17 alternately stacked. The stack structure body 18 is configured in such a way that the heat exchange parts 17 are positioned in the upper end part and the lower end part (outermost parts in the stacking direction).

The heat generation part 16 has a thermal storage material 19 (see Figure 1) that generates heat upon chemical reaction with NH₃ which is a gaseous reaction medium and that desorbs NH₃ upon reception of the waste heat, and a metal casing 20 that contains the thermal storage material 19. The metal casing 20 is formed of a metal material having corrosion resistance to NH₃, for example, stainless steel.

As the thermal storage material 19, a material having a constitution of MXₐ which is a halide is used. Herein, M is an alkali earth metal such as Mg, Ca and Sr or a transition metal such as Cr, Mn, Fe, Co, Ni, Cu and Zn. X is Cl, Br, I or the like. a is 2 to 3. The thermal storage material 19 is press-molded and sealed in the metal casing 20.

In this stage, an additive for improving heat conductivity may be mixed into the thermal storage material 19. As the additive, carbon fibers, carbon beads, SiC beads, polymer beads, polymer fibers or the like may be used or metal such as Cu, Ag, Ni, Ci-Cr, Al, Fe and stainless steel may also be used.

The heat exchange part 17 forms flow channels through which the exhaust gas can flow. The heat exchange part 17 is constituted of a metal fin, for example, formed into a zigzag shape in its cross section or a wave-like shape in its cross section. In this stage, in order to increase a contact area of the metal fin with the exhaust gas, a part of the metal fin may be formed to have an offset or the metal fin may also be formed to meander. The heat exchange part 17 is made of metal and is formed of a metal material having corrosion resistance to nitric acid, sulfuric acid and the like contained in the exhaust gas, herein, of stainless steel the same as that of the metal casing 20.

The metal casing 20 of the heat generation part 16 and the heat exchange part 17 are joined to each other by means of joining metals to each other, such as brazing, welding and the like. In this way, the heat generation part 16 and the heat exchange part 17 are in close contact with each other to afford an integrated structure.

A metal plate 21 is disposed at each of an upper face part and a lower face part of the stack structure body 18. The metal plate 21 is formed, for example, of stainless steel. To provide the metal plates 21 can secure the strength of the stack structure body 18. Moreover, expansion of the thermal storage material 19 can be suppressed by the metal plates 21. Notably, the metal plates 21 are not particularly necessarily needed.

An introduction header 22 for introducing NH₃ into each heat generation part 16 is fixed onto one lateral side of the stack structure body 18. One end part of the pipe 12 is attached to the introduction header 22.

Returning to Figure 1, the adsorber 13 contains an adsorption material 23 capable of retention and desorption of NH₃ through physical adsorption. As the adsorption material 23, activated carbon, zeolite or the like is used. The adsorber 13 is a reservoir that stores NH₃ through the physical adsorption of NH₃ to the adsorption material 23.

In the chemical thermal storage device 10 as above, when the temperature of the exhaust gas from the engine 2 (exhaust temperature) is low, the solenoid valve 14 opens, and NH₃ desorbed from the adsorption material 23 in the adsorber 13 is supplied to the reactor 11 through the pipe 12 by a pressure difference between those in the reactor 11 and the adsorber 13. Then, NH₃ is introduced into each heat generation part 16 through the introduction header 22. Then, in each heat generation part 16, when the thermal storage material 19 (for example, MgBr₂) and NH₃ undergo chemical reaction to result in chemical adsorption (coordinate bonding), heat is generated from the thermal storage material 19. In other words, a reaction (exothermic reaction) from the left side to the right side in the following reaction formula (A) takes place.

MgBr₂+xNH₃ ⇔ Mg(NH₃)ₓBr₂+heat ... (A)

Then, the heat generated in the thermal storage materials 19 is transferred to the heat exchange parts 17 via the metal casings 20, the heat is transferred to the exhaust gas in the heat exchange parts 17 (heat exchange between the thermal storage materials 19 (heat generation parts 16) and the exhaust gas takes place), and thereby, the temperature of the exhaust gas is raised. Then, the oxidation catalyst 4 is heated to the active temperature suitable for cleaning up the pollutants with the exhaust gas whose temperature is raised.

On the other hand, when the exhaust gas temperature becomes higher than the heat generation temperature of the thermal storage materials 19, the waste heat is given to the thermal storage materials 19 via the heat exchange parts 17 and the metal casings 20, and thereby, NH₃ is separated from the thermal storage materials 19. In other words, a reaction (regeneration reaction) from the right side to the left side in the aforementioned reaction formula (A) takes place. Then, NH₃ desorbed from the thermal storage materials 19 in the heat generation parts 16 is recovered into the adsorber 13 through the pipe 12.

In this way, by using the chemical thermal storage device 10, the temperature of the exhaust gas can be raised at low exhaust temperature without giving external energy. In this way, the exhaust purification system 1 high in fuel efficiency and high in rate of purification can be constructed.

In this stage, the metal casings 20 of the heat generation parts 16 and the heat exchange parts 17 are joined (fixed) to each other by brazing, welding or the like. Due to this, heat resistance at the interface between the metal casing 20 and the heat exchange part 17 is small. Accordingly, in the aforementioned exothermic reaction, the heat generated in the thermal storage materials 19 is easily transferred to the heat exchange parts 17. Moreover, in the aforementioned regeneration reaction, the waste heat is easily transferred from the heat exchange parts 17 to the thermal storage materials 19.

Moreover, since the reactor 11 has the stack structure body 18 having the plurality of heat generation parts 16 and the plurality of heat exchange parts 17 alternately stacked, each heat exchange part 17 is to be formed to be thin. Due to this, since a distance between the heat generation part 16 and the center part of the heat exchange part 17 in the stacking direction becomes short, the heat resistance between the heat generation part 16 and the center part of the heat exchange part 17 in the stacking direction becomes small. Accordingly, in the exothermic reaction, the heat generated in the thermal storage materials 19 is sufficiently transferred to the entirety of the heat exchange parts 17. Moreover, in the regeneration reaction, the waste heat is effectively transferred from the entirety of the heat exchange parts 17 to the thermal storage materials 19.

Therefore, according to the present embodiment, in the exothermic reaction, since the heat generated in the thermal storage materials 19 is efficiently transferred to the heat exchange parts 17, the heat generated in the thermal storage materials 19 can be efficiently transferred to the exhaust gas via the heat exchange parts 17. In this way, the temperature of the exhaust gas can be sufficiently and smoothly raised. Moreover, in the regeneration reaction, since the waste heat is efficiently transferred from the heat exchange parts 17 to the thermal storage materials 19, desorption of NH₃ from the thermal storage materials 19 is promoted and recovery of NH₃ into the adsorber 13 can be effectively performed.

Moreover, in the present embodiment, since the heat exchange parts 17 are disposed at the upper end part and the lower end part of the stack structure body 18, the heat generated from the heat generation parts 16 can be suppressed from being released to the outside via the exhaust pipe 15 to be a waste, and a large part of the heat generated from the heat generation parts 16 can be effectively used for heat exchange with the exhaust gas in the heat exchange parts 17. Furthermore, since the heat exchange parts 17 protect the heat generation parts 16 from an impact object such as a stone, impact of the impact object is absorbed by the heat exchange parts 17, as a result, inconvenience such as damage of the heat generation parts 16 can be prevented.

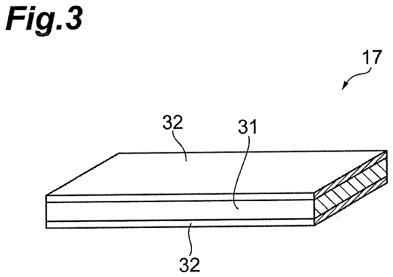

Notably, the present invention is not limited to the aforementioned embodiment. For example, while in the aforementioned embodiment, the heat exchange part 17 is configured to be the metal fin formed of a single metal material (herein, stainless steel), the heat exchange part 17 may be configured to be a metal fin formed of a plurality of kinds of metal materials (cladding material). Figure 3 illustrates a modification of the metal fin constituting the heat exchange part 17.

In Figure 3, the heat exchange part 17 is constituted of a high heat conductive metal foil (first metal layer) 31 and corrosion resistant metal foils (second metal layers) 32 which are respectively joined onto both surfaces of the high heat conductive metal foil 31. In other words, the heat exchange part 17 has a structure to sandwich the high heat conductive metal foil 31 with a pair of corrosion resistant metal foils 32.

The heat conductivity of the high heat conductive metal foil 31 is higher than the heat conductivity of the corrosion resistant metal foil 32. As to corrosion resistance to the exhaust gas, the corrosion resistant metal foil 32 is higher than the high heat conductive metal foil 31. For the material of the high heat conductive metal foil 31, copper, silver, brass, aluminum alloy, magnesium alloy and the like are used. For the material of the corrosion resistant metal foil 32, stainless steel and the like are used. The heat exchange part 17 is produced by rolling and joining the high heat conductive metal foil 31 and the corrosion resistant metal foils 32 to each other with milling rollers.

In this way, by forming the heat exchange part 17 of a cladding material consisting of the high heat conductive metal foil 31 and the corrosion resistant metal foils 32, the heat generated in the thermal storage materials 19 can be further sufficiently transferred to the entirety of the heat exchange parts 17, and the heat exchange parts 17 can be prevented from being corroded by nitric acid, sulfuric acid and the like contained in the exhaust gas.

Notably, such a cladding material consisting of the high heat conductive metal foil 31 and the corrosion resistant metal foils 32 may be used for the metal material of the metal casing 20 of the heat generation part 16.

Moreover, while in the aforementioned embodiments, the heat exchange parts 17 are disposed on the outermost side of the stack structure body 18 in the stacking direction, not specially limited to this, the heat generation part 16 may be disposed on the outermost side of the stack structure body 18 in the stacking direction. Moreover, the numbers of stages of the heat generation parts 16 and the heat exchange parts 17 in the stack structure body 18 can be properly determined depending on products to be used and the like.

Furthermore, while in the aforementioned embodiments, NH₃ is used as the reaction medium which undergoes chemical reaction with the thermal storage materials 19 in the heat generation parts 16, the reaction medium is not specially limited to NH₃ but CO₂, alcohol, water or the like may be used.

Moreover, while one chemical thermal storage device 10 of the aforementioned embodiments is disposed in the upstream stage of the oxidation catalyst (DOC) 4, not specially limited to this, one chemical thermal storage device 10 may be disposed in the upstream stage of any of the DPF 5, the SCR 6 and the oxidation catalyst (ASC) 7, or a plurality of chemical thermal storage devices 10 may also be disposed in the upstream stages of any of the DOC 4, the DPF 5, the SCR 6 and the ASC 7.

Moreover, while the chemical thermal storage device 10 of the aforementioned embodiments heats the exhaust gas discharged from the diesel engine 2, a chemical thermal storage device of the present invention is not specially limited to this but can also be applied to one which heats exhaust gas discharged from a gasoline engine. Moreover, a chemical thermal storage device of the present invention can also be applied to one which heats a gaseous or liquid fluid other than exhaust gas, for example, oil, a heat medium or the like.

### Reference Signs List

10 ... Chemical thermal storage device, 11 ... Reactor, 13 ... Adsorber (reservoir), 16 ... Heat generation part, 17 ... Heat exchange part, 18 ... Stack structure body, 19 ... Thermal storage material, 20 ... Metal casing, 31 ... High heat conductive metal foil (first metal layer), 32 ... Corrosion resistant metal foil (second metal layer).

## Claims

1. A chemical thermal storage device comprising:
a reservoir that stores a reaction medium; and
a reactor that is connected to the reservoir and heats a fluid,
wherein
the reactor includes a heat generation part that generates heat, and a heat exchange part made of a metal that forms a flow channel through which the fluid can flow and that transfers the heat generated in the heat generation part to the fluid, the reactor having a stack structure body having the heat generation part and the heat exchange part alternately stacked,
the heat generation part has a thermal storage material that generates the heat upon chemical reaction with the reaction medium and desorbs the reaction medium upon reception of the heat from the fluid, and a metal casing that contains the thermal storage material, and
the metal casing and the heat exchange part are joined to each other.

2. The chemical thermal storage device according to Claim 1, wherein the heat exchange part is disposed on an outermost side of the stack structure body in a stacking direction.

3. The chemical thermal storage device according to Claim 1 or 2, wherein
the heat exchange part has a first metal layer, and second metal layers provided in such a way as to sandwich the first metal layer and having corrosion resistance to the fluid, and
heat conductivity of the first metal layer is higher than heat conductivity of the second metal layer.
